# EUROPÄISCHE PATENTANMELDUNG

(11) **EP 2 042 727 A1**
(43) Veröffentlichungstag der Anmeldung: **01.04.2009**
(21) Anmeldenummer: 07117400.7
(22) Anmeldetag: 27.09.2007
(51) Int. Cl.: F02P 1/08

(54) **Zündsystem für Verbrennungsmotoren**

(71) Anmelder: Prüfrex-Elektro-Apparatebau, 90556 Cadolzburg (DE)
(72) Erfinder: Kiessling, Leo, 90556 Cadolzburg (DE); Lajda, Marek, 90762 Fürth (DE)
(74) Vertreter: Götz, Georg Alois

(57) **Zusammenfassung**

Elektrisches Zündverfahren, -anordnung, -anlage oder -system für Brennkraftmaschinen, unter Verwendung einer Anordnung mehrerer Spulen (U1,LS; U2,TS; U5,Lp,Ls) und eines sich synchron zur Maschine drehenden Polrads oder Magnetgenerators (P, M, S, N), dessen Magnetfeld dabei die Spulen (LS,TS,Lp,Ls) zeitweise durchflutet und darin pro Umdrehung eine Folge von Magnetflussänderungen (Ba, 1, 3, 5, 7; Bb, 9, 11, 13, 15) erzeugt, wobei eine Folge entsprechender Wechselspannungs-Halbwellen (2,4,6,8; 10,12,14,16) in den Spulen (U1;U2;U5) induziert wird, die verwendet werden:
zum Laden eines Energiespeicherelements (U4), das durch Betätigen eines Zündschalters (U9) über die Primärspulenwicklung (Lp) eines Zündübertragers (U5) zum Auslösen eines Zündfunkens (FU) entladen wird, und
zur Bildung der Betriebsspannung oder Spannungsversorgung (VDD) für eine elektronische, analoge und/oder digitale und/oder programmierbare Steuerung (U8), die zur Betätigung des Zündschalters (U9) in einem Zündzeitpunkt ZZP in Abhängigkeit von erfassten Wechselspannungs-Halbwellen (2,4,6,8; 10,12,14,16) und/oder vom Zustand der Brennkraftmaschine, beispielsweise deren Drehstellung oder Drehzahl (30-34), eingesetzt wird, wobei ein Stoppbeziehungsweise Abstellsystem für die Brennkraftmaschine, das programm- und/oder schaltungstechnisch dazu ausgebildet oder eingerichtet ist, während des Stopp- und Auslaufvorganges und/oder des Stillstandes der Brennkraftmaschine eine Entladung des Energiespeicherelements (U4) zu verhindern und/oder dessen Aufladung zu betreiben, so dass für den nächsten Maschinenstart ein geladenes Energiespeicherelement zur Verfügung steht.

## Beschreibung

Die Erfindung betrifft eine Kondensatorzündanlage, -verfahren, - vorrichtung und/oder -system für Verbrennungmotoren, vorzugsweise handgeführte Klein-Verbrennungsmotoren. Erfindungsgemäß zeichnen sich diese unter anderem durch ein besonders leichtes Startverhalten insbesondere beim Wiederstart nach kurzen STOP-Pausen aus.

Hierzu sind folgende Funktionen in der Zündung erforderlich
- Eine Steuerung welche bei geringen Drehzahlen bereits funktionsfähig ist, d. h. die Winkellage sicher erkennt. Bei mikroelektronischen Steuerung muss hierzu auch die Versorgungsspannung innerhalb weniger Winkelgrade aufgebaut sein.
- Eine rückschlagfreie Zündung, dies wird mit einer Zündverstellvorrichtung erreicht, welche automatisch den Zündzeitpunkt bei geringen Drehzahl auf nahe OT (oberer Totpunkt) legt und diesen mit steigender Drehzahl frühverstellt.
- Einen Leistungsteil, welcher bei den geringen Drehzahlen einen ausreichend hohen Hochspannungspuls abgibt, um an den Zündkerzenelektroden, trotz der geringen Drehzahlen und hohen Drücke im Brennraum nahe OT, einen Funkenüberschlag zu erzeugen. Dies wird durch ein Abstellsystem gewährleistet, das den Zündkondensator während des Stoppvorganges bzw. beim Erniedrigen der Drehzahl der Maschine während des Abstellvorganges nicht entlädt und somit beim Wiederstart ein voll geladener Zündkondensator zur Verfügung steht. Dafür muss der Zündkondensatorkreis hochohmig ausgelegt werden, indem beispielsweise der Stoppschalter nicht die Ladespule und den Zündkondensator belastet, sondern das Gate des Zündentladeschalters auf Masse gelegt und somit dessen Ansteuerung beispielsweise durch einen Mikrokontroller verhindert bzw. nicht oder nur in bestimmten Winkelbereichen und/oder zu gewissen Drehzahlen angesteuert wird. Eine weitere Möglichkeit zur hochohmigen Auslegung besteht darin, beim Zündkondensator den an sich üblichen Entladewiderstand wegzulassen.

Anwendungsbereich:
Die Erfindung lässt sich auf eine Kondensatorzündanlage für kleine Verbrennungsmotoren, insbesondere für handgeführte Geräte wie Kettensägen, anwenden.

Unter anderem ist es Ziel der Erfindung, eine Steuerung für eine Kondensatorzündanlage zu entwickeln, welche es erlaubt einen Verbrennungsmotor mit geringem Kraftaufwand zu starten, insbesondere beim Wiederstart nach kurzen STOP-Pausen (quasi START-STOP Betrieb).

Die Erfindung sollte sich bei Zündungen mit analogen Steuerungen als auch bei mikroelektronischen Steuerungen anwenden lassen.

Die Erfindung basierend auf der Kombination - Abstellen und Beibehalten des voll aufgeladenen Kondensators und Frühverstellung im Starbereich - ist grundsätzlich für analoge und digitale Zündungen anwendbar. Als Ausführungsbeispiel ist eine Umsetzung mit digitaler Steuerung beschrieben.

Im Sinne des Erfindungszieles ist es vorteilhaft, die Zündung so auszulegen, dass diese bereits beim ersten OT-Durchgang (Verdichtungstakt), bei geringen Winkelgeschwindigkeiten (beispielsweise im Bereich um 200RPM) einen Zündfunke an der Zündkerze auslöst und somit der Motor anspringen kann.

Dadurch ist nur ein geringer Hub am Anwerfseil (praktischer Versuch ab Druckpunkt ca. 15 cm) erforderlich, was bei beengten Platzverhältnissen vorteilhaft ist. Das Anwerfseil ist ca. 0,8m Lang und ermöglicht so 5..6 OT - Durchgänge.

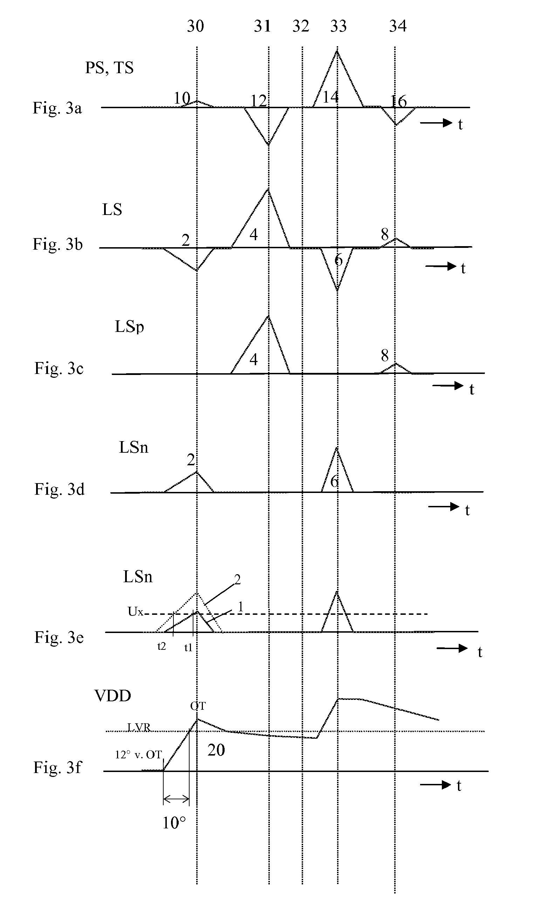

Zweckmäßig erfolgt die Drehung der Kurbelwelle ab spätestens **12° v. OT bis zu OT** ab etwa 200 rpm, um die Versorgungsspannung Vdd (siehe Fig.3f) von 0V bis zur Arbeitsspannung, d. h. größer LVR (Low Voltage Reset) aufzubauen. Aufgrund der niedrigen Startdrehzahl ist ein Drehen des Motors über OT und somit durch den Verdichtungstakt mit geringem Kraftaufwand möglich. Diese Merkmale sollen für Polräder mit beispielsweise größer gleich 90mm Durchmesser gültig sein.

Druckpunkt: vor dem Anziehen wird durch kurze Seilzüge der Motor in eine solche Stellung gebracht, dass die dabei ansteigende Verdichtung im Motor die Ausübung eines stark ansteigenden Drehmoments zum Durchdrehen erfordert.

Die Erfindung betrifft unter anderem eine Magnetzündung nach dem Prinzip der Kondensatorentladung, vor allem geeignet für Kleinmotoren, vorzugsweise handgeführte Kleinmotoren. Ferner betrifft die Erfindung ein elektrisches Zündverfahren für Brennkraftmaschinen, welche es ermöglicht, einen Funken beim 1. OT - Durchgang und langsamer Kurbelwellengeschwindigkeit (beispielsweise um 200 RPM beziehungsweise UpM) zu realisieren. Dieser Effekt tritt insbesondere beim Wiederstart der Maschine oder nach kurzen Pausen auf.

Bei dem erfundenen Zündsystem genügen ein Drehwinkel der Kurbelwelle von vorzugsweise <30° und geringe Winkelgeschwindigkeiten von ca. 200 rpm um einen Funken und damit den Start der Maschine zu erreichen. Daher ist ein minimaler Hub (vorzugsweise <20cm) und geringer Kraftaufwand am Anwerfseil erforderlich um die Maschine in den Betriebszustand zu versetzen.

Für die Umsetzung eines solchen Leichtstartzünders ist eine Kombination von verschiedenen Merkmalen notwendig um den gewünschten Effekt zu erreichen. Dazu gehört eine Frühverstellung des Zündzeitpunktes (ZZP) im Startbereich für eine rückschlagsfreie Zündung beim Start, die Realisierung eines Funkenüberschlages bei sehr niedrigen Drehzahlen und der Aufbau der Versorgungspannung Vdd innerhalb weniger Winkelgrade langsamer Kurbelwellendrehung bei der Umsetzung einer Steuerung mit Mikrokontroller.

Die Erfindung sollte sich bei Zündungen mit analogen Steuerungen als auch bei mikroelektronischen Steuerungen anwenden lassen.

### Frühverstellung / rückschlagfreie Zündung im Startbereich

Für die Erfindung ist eine Verstellung notwendig, die bei niedrigen Drehzahlen den ZZP in die Nähe des oberen Totpunktes (OT) legt. Wird bei geringen Drehzahlen zu früh vor OT gezündet wird, besteht die Gefahr eines Rückschlages (Kick-Back). Im Arbeitsbereich der Maschine sind jedoch frühe ZZPs (in der Praxis ca. 15° - 35 ° v.OT) erforderlich um optimale Verbrennungen zu gewährleisten. Die Lösung für diese Aufgabe ist eine analoge automatische Frühverstellung nach US5069193 (CDIV).

Das Funktionsprinzip der US5069193 wird gemäß einer optionalen Ausführungsvariante mit der allgemeinen erfinderischen Idee kombiniert.

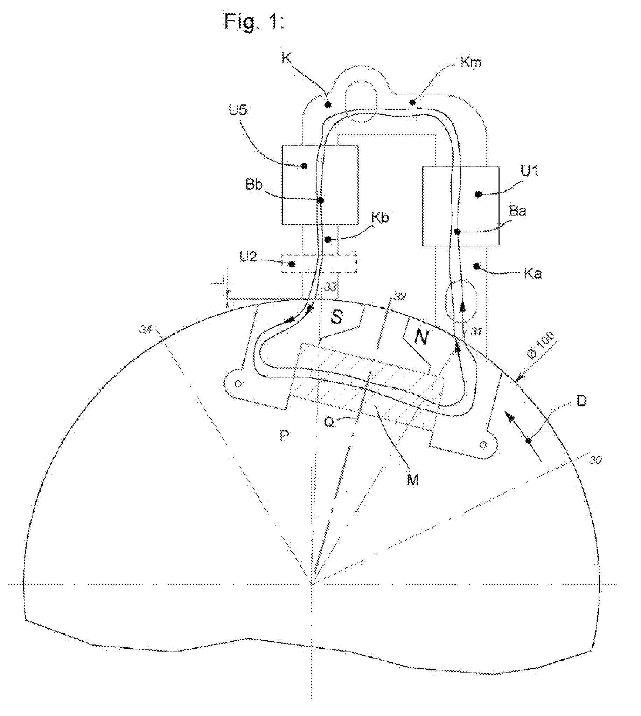

Durch das synchron mit dem Motor rotierende Polrad P (Fig.1) mit dem Magneten M und den Polschuhen N,S wird der Eisenkern K mit den Schenkeln Ka und Kb in jeder Umdrehung periodisch über den Luftspalt L von einem Magnetfeld Ba bzw. Bb durchflutet. Auf dem Schenkel Ka befindet sich die Ladespule U1 und auf dem Schenkel Kb sowie der Zündübertrager U5 mit Primär- und Sekundärspule. Alternativ dazu kann sich auf dem Eisenschenkel Kb noch eine zusätzliche Spule, z.B. eine Triggerspule U2 befinden.

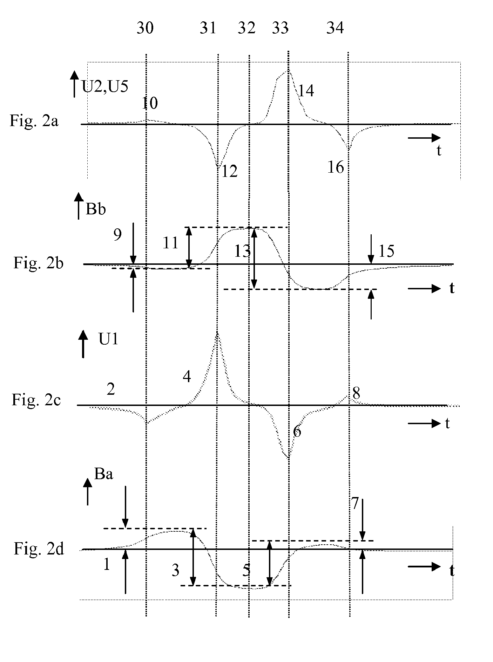

In den Spulen auf den Schenkeln Ka und Kb entsteht bei einem linksdrehenden Polrad der erste Spannungshub, wenn sich die mittlere Querachse Q des Magneten M an der Position 30 vorbeibewegt (Fig.1). Das Magnetfeld Ba (Fig. 2d, Anstieg 1) im Eisenschenkel Ka steigt beim Vorbeidrehen des Polrades an dieser Position stärker an als das Magnetfeld Bb (Fig. 2b, Anstieg 9) im Schenkel Kb. Das größte induzierte Spannungssignal der Ladespule während einer Umdrehung wird durch den Flusswechsel 3 oder Hauptflusswechsel (Fig. 2d) hervorgerufen. Die größte Spannung der Spulen, die sich auf dem Eisenschenkel Kb befinden wird durch den Hauptflusswechsel 13 (Fig. 2b) verursacht.

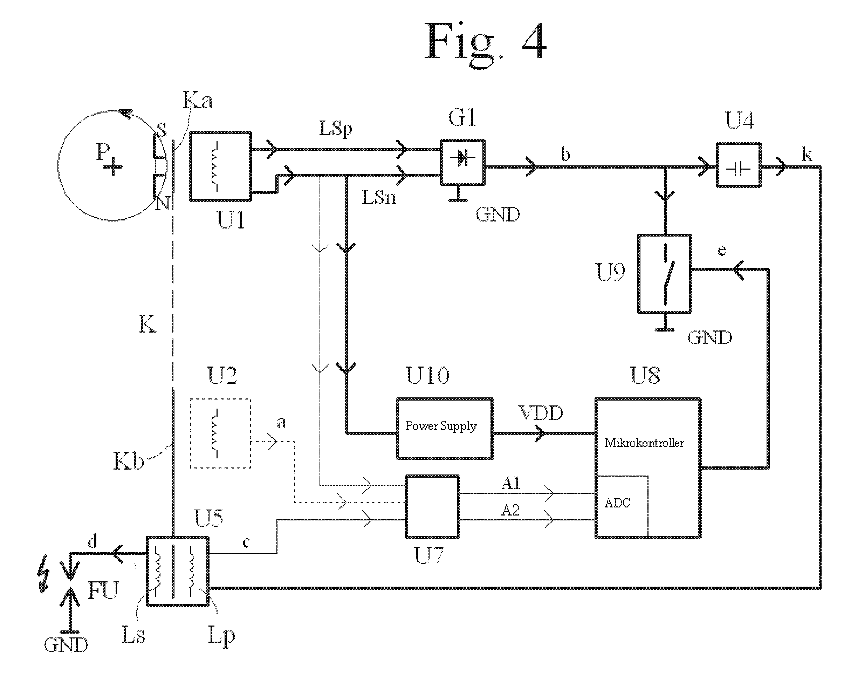

Die induzierten Spannungspegel der Ladespule U1 und Primärspule PS des Zündtransformators U5 werden über die Ankoppelschaltung U7 (Fig.4) auf den Messbereich des Mikrokontrollers U8 abgestimmt und können somit von den ADCs oder den Komparatoren des Mikrokontrollers einfach abgetastet werden.

Im Sinne der Erfindung wird vorgeschlagen, auf der ersten Halbwelle der Ladespule (Fig. 3d, Halbwelle 2) einen Zündvorgang auszulösen. Die Amplitude der Ladespule nimmt mit steigender Drehzahl zu. Wird nun auf einer festen Schwelle Ux (Fig. 3e) in dieser Halbwelle gezündet, verschiebt sich der Zündzeitpunkt mit steigender Drehzahl auf einen früheren Zeitpunkt. Bei einer kleinen Drehzahl wird so zum Zeitpunkt t1 (Fig. 3e, Kurve 1)und bei größerer Drehzahl zu einem gegenüber OT früheren Zeitpunkt t2 (Fig. 3e, Kurve 2) gezündet. Folglich steigt die Früh-Verstellung im Start-Drehzahlbereich wegen der dabei zunehmenden Geschwindigkeit kontinuierlich an. Da nur in der ersten, nicht aber in der dritten Ladespulenhalbwelle ein Zündfunke ausgelöst werden soll, ist eine Erkennung der Winkellage erforderlich, ohne dass Kenntnis von den vorherigen Spulensignalen erforderlich ist. Dies ist dann wichtig, wenn die Versorgungsspannung V_{DD} durch das Ladespulensignal über den Low Voltage Level ansteigt. Zu diesem Zeitpunkt muss die Steuerung U8 die Winkelposition des Polrades P eindeutig bestimmen.

Sobald das Spannungssignal LSn die Schwellspannung Ux (Fig. 3e) überschreitet, wird der Spannungspegel der Primärspule geprüft. Die Spannungshöhe der Primärspule zu diesem Zeitpunkt entscheidet, ob dies die erste oder die dritte Halbwelle ist (Fig. 3a, Halbwelle 10 oder 14). Durch den beschriebenen Hauptflusswechsel ist die Amplitude der Halbwelle 14 wesentlich größer und breiter als die der Halbwelle 10 (Fig. 3a). Somit ist die Position des Polrades eindeutig bestimmbar.

Oberhalb der Drehzahlen des Startbereichs kann der Mikrokontroller die Drehzahl erfassen, da die Versorgungsspannung über die komplette Umdrehung ansteht, und somit die Periodendauer zwischen Spulensignalen erfasst werden kann und hierdurch der Mikrokontroller die Drehzahlinformationen hat. Somit kann im Arbeitsdrehzahlbereich der Maschine nach Stand der Technik eine Zündverstellungskurve realisiert werden.
Für die Lageerkennung werden vorzugsweise die Signale von der Primärspule U5 des Zündtransformators verwendet, sollten die Pegel dieser Spule nicht ausreichen, müssen die Signale einer einzelnen Trigger- oder Hilfsspule U2 auf dem Schenkel Kb (Fig. 1, ) herangezogen werden.

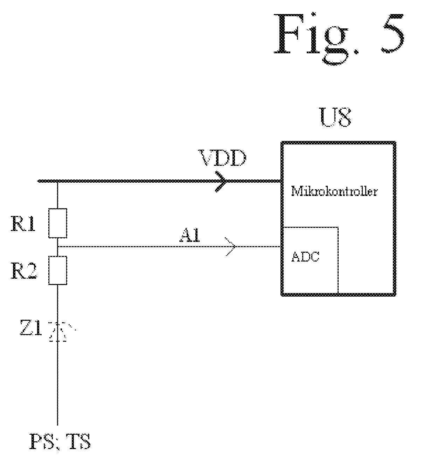

Wenn die Halbwellen 10 und 14 der Primär- bzw. Triggerspule (Fig. 3a) negative Polarität haben, dann kann optional über einen Spannungsteiler gemäß Fig. 5 zwischen VDD und Primärspule die Primärspannung indirekt erfasst werden, so dass der Spannungswert dann im Messbereich des ADCs oder der Komparatoren des Mikrokontrollers liegt.

Vorzugsweise durch Umschalten der Signalschwelle Ux (Fig. 3e), auf der gezündet wird, in der Steuerung kann die Zündverstellung im Start- und Leerlaufbereich variiert werden.

### Funkenüberschlag beim Start

Um das Benzin-Luft-Gemisch im Verbrennungsraum zu entflammen ist ein Funkenüberschlag zwischen den Elektroden der Zündkerze erforderlich. Dazu wird eine hohe Ladespannung auf dem Zündkondensator benötigt. Die Ladespannung ist abhängig von der Ladespulenamplitude und diese wiederum von Drehzahl der Maschine. Bei niedrigen Drehzahlen ist die Ladespulenamplitude klein und somit die Ladung auf dem Zündkondensator, dieser Umstand beeinflusst maßgeblich die Startdrehzahl. Eine Lösung des Problems wäre deutlich mehr Aufwand in das Magnetsystem und die Ladespule zu investieren welches wiederum höhere Kosten und größeren Bauraum des Zündsystems bedeutet.

Bei Zündsystemen mit automatischer Frühverstellung nach US5069193 (CDIV) wird der Zündkondensator in der vorhergehenden Umdrehung geladen, somit ist ein Motorenstart oder eine Zündung auf dem ersten OT-Durchgang nicht möglich.

Die Lösung ist die Kondensatorladung von dem davor liegenden Motorlauf aufzuheben für den nächsten Start. Wenn die Maschine gestoppt wird und ausläuft ist keine weitere Kondensatorentladung für einen Zündfunken mehr notwendig, der Zündkondensator wird hingegen durch die ab dem Drücken des Stopp-Schalters bis zum Stillstand durchgeführten Umdrehungen weiter aufgeladen. Hierbei ist zu beachten, dass im warmen Zustand zündfähiges Gemisch im Brennraum ist, so dass der Motor durchaus mit einem kräftigen Zündfunken im ersten OT-Durchgang startbar ist.

Hierzu wird vorgeschlagen, ein Abstellsystem einzusetzen, welches die Aufladung des Zündkondensators nicht verhindert, sondern dessen Entladung verhindert.

Dem Stand der Technik entsprechend, wie in DE102004059070 dargestellt bietet es Vorteile den Abstellvorgang durch einen Taster einzuleiten. Nach dem Loslassen dieses Tasters ist es erforderlich weiterhin keinen Zündfunken zu erzeugen bis zum Motorstillstand. Hierzu wird der Ladestrom durch den Zündschalter kurzgeschlossen, um eine Aufladung des Zündkondensators zu verhindern. Zum Stand der Technik gehört auch EP1 691 053. Weiterhin EP 1 496 249 hier wird in Fig.15 dargestellt, dass der Zündschalter mit dem Signal s4 über die volle Umdrehung angesteuert wird um nach erkennen des Zustandes Abstellen (h1 Fig. 15c) auch nach dem Loslassen des Abstellschalters 10 Fig.12 die Ladung des Zündkondensators durch Kurzschließen der positiven Ladespulenhalbwellen FIG. 15 e1 zu verhindern.

Unter Übertragung entsprechender Merkmale der älteren europäischen Patentanmeldung 07 113 616.2 wird erfindungsgemäß vorgeschlagen, den Zündschalter in der Betriebsart Abstellen nicht über 360° oder annähernd 360° anzusteuern, sondern nur in den Winkelbereichen, in denen der Zündkondensator von der Ladespule oder anderen Spulen aufgeladen würde. Innerhalb diesem nun eingeschränkten Winkelbereich ist der Zündschalter entweder durch einen andauernden Puls oder einen Burst beziehungsweise Impulsfolge anzusteuern, wobei die Pausen zwischen den Einzelimpulsen so weit gewählt werden, dass sich der Spannungswert des Zündkondensators nicht so weit erhöht, dass sich beim nächsten Einschalten des Zündentladeschalters durch die Entladung des Zündkondensators ein Funkenüberschlag an der Zündkerze bilden kann. Dazu wird auf die genannte ältere Patentanmeldung, Fig.2-1c, verwiesen. Diese Dauer der Pausen zwischen den Ansteuerpulsen ist im Speicher der Steuerung abgelegt und kann je nach Drehstellung und Drehzahl unterschiedliche Werte annehmen, je nach den Kennwerten des Ladesystems.

Weiterhin wird vorgeschlagen, unterhalb einer bestimmten Drehzahl trotz Funkenabschaltung den Ladestrom des Zündkondensators nicht durch Ansteuerung des Zündschalters kurzzuschließen, sondern den Zündschalter nicht mehr anzusteuern. Die Drehzahl muss so tief gelegt werden, dass der Zündkondensator trotz fehlender Entladevorgänge von der Ladespule nicht auf unzulässig hohen Spannungen, Risiko Spannungsdurchschlag im Zündkondensator, geladen wird.

Durch die oben genannte Erfindung, dass bei der Betriebsart Abstellen zumindest im unteren Drehzahlbereich die Funkenabschaltung dadurch erreicht wird, dass die der Zündschalter nicht mehr angesteuert wird, also keine Entladung des Zündkondensators mehr erfolgt bis zum Motorstillstand, ist der Zündkondensator mit Erreichen des Motorstillstandes sicher auf einen hohen Wert aufgeladen. Hierdurch wird erreicht, dass bei einem Wiederstart nach einer Pause im Minutenbereich eine wesentlich höhere Zündenergie zur Verfügung steht (Startanhebung) wie bei einem Motorstart ohne ausnutzen dieses Effektes, insbesondere bei Motoren mit Handstartvorrichtung. Hierzu ist es von Vorteil Bauteile mit geringen Leckströmen einzusetzen um die angesprochene Zeit für einen Start mit Startanhebung auszudehnen. Hierdurch ist in der ersten Umdrehung eine hohe Zündenergie vorhanden und es wird begünstigt, dass bei einem warmen Verbrennungsmotor, bei welchem über eine gewisse Zeit nach dem Abstellen noch brennfähiges Gemisch im Ansaugtrakt ist, der Motor anspringt.

Wegen weiterer Details wird auf die oben genannte ältere Patentanmeldung Bezug genommen, deren Inhalt hiermit in die vorliegende Beschreibung einbezogen wird.

In der Praxis wird nach dem Abstellvorgang noch nach 20 min ein leistungsstarker Funke von 10kV beim ersten OT-Durchgang erzeugt. Wie schon erwähnt, ist es hierzu erforderlich, dass der Kondensatorstromkreis hochohmig aufgebaut ist, beispielsweise durch Weglassen des an sich üblichen Entladewiderstandes parallel zum Zündkondensator, so dass nur geringe Leckströme fließen. Letzteres läßt sich mit Standardbauteilen erreichen. In der Praxis hat sich gezeigt, dass der Zündkondensator nach dem Abstellvorgang noch nach ungefähr zwanzig Minuten einen leistungsstarken Zündfunken von etwa zehn Kilovolt beim ersten OT-Durchgang innerhalb einer Polrad-Umdrehung zu generieren vermag.

Um unbeabsichtigtes Starten bei Montagearbeiten / Service, wenn der Motor gedreht wird zu verhindern ist es vorteilhaft an Motoren mit einer so geringen Startdrehzahl und Tasterstopp die Betätigung des Abstellens mit einem Taster mit zusätzlicher Raststellung auszustatten. Beispiel eines solchen Schalters ist in DE10115359 vorgestellt.

### Ausführungsbeispiel mit Tasterstopp

Eine Variation zu dem beschriebenen Abstellverfahren wäre ein vollständiger Verzicht auf die Entladung des Zündkondensators beim Abstellvorgang. Ein Überladen des Zündkondensators ist bei dieser Methode durch den Einsatz von spannungsbegrenzenden Bauteilen, in der Regel Varistoren, zu verhindern. Diese Methode erfordert zwar einen größeren Materialensatz und ist daher mit höheren Kosten verbunden, lässt sich aber softwaretechnisch einfacherer realisieren.

### Ausführungsbeispiel Low Voltage Stopp

Beim diesem Abstellverfahren wird das Gate des Zündthyristors über einen Stopptaster oder - schalter auf Masse gelegt wodurch die Entladung des Zündkondensators verhindert wird. Ein Beispiel eines solchen Prinzips ist in Fig. 9 in DE 197 36 032 A1 dargestellt. In dieser Abbildung verhindert der Stopptaster U13 die Ansteuerung des Halbleiterventils U4 durch den Mikrokontroller U8.

### Aufbau der Versorgungsspannung innerhalb weniger Winkelgrade

Um ein Zünden bei dem ersten OT-Durchgang zu ermöglichen, muss bei der Verwendung von Speicherprogrammierbaren Steuerrungen die Versorgungsspannung innerhalb weniger Winkelgrade aufgebaut werden.

Die Versorgungspannung Vdd des Mikrokontrollers muss also mit dem Start innerhalb weniger Winkelgrade ansteigen und darf aufgrund der beschriebenen Lageerkennung und Frühverstellung im Startbereich nach dem Zündfunken wieder unter den Betriebsspannungsbereich abfallen.

Die Spannungsversorgung für den Prozessor wird über die Versorgungsschaltung U10 (Fig. 4) bereitgestellt. Diese bezieht ihre Energie direkt aus der 1. und 3. Halbwelle der Ladespule, da der Abgriff vor dem Brückengleichrichter G1 (Fig.4) erfolgt. Wenn kein Brückengleichrichter verwendet wird, dann können die entsprechenden Halbwellen direkt von der Ladespule ausgekoppelt werden.

Bei sehr niedrigen Drehzahlen entsteht der für den Zündfunken wichtige Versorgungsspannungsaufbau innerhalb der 1. Halbwelle der Ladespule. Diese 1. Halbwelle ist in ihrer Amplitude sehr klein, da sie aus dem magnetischen Nebenfluss (Fig. 2d, Fluss 1) hervorgeht. Dies ist außerdem der Winkelbereich mit der geringsten Momentanwinkelgeschwindigkeit, da sich hier der Kolben unmittelbar vor OT befindet und einen hohen Verdichtungsdruck aufbaut. Die Steuerung muss also innerhalb dieser schwachen Halbwelle (es genügt ein Winkelbereich um den Scheitelpunkt der Ladespule) im Betrieb sein, die Position des Polrades erkennen und den Zündschalter zu bedienen. Ermöglicht wird dies durch das beschriebene Konzept der Lagerkennung, d.h. der Mikrokontroller erkennt sofort nach dem Aufwachen beim Überschreiten einer Schwelle Ux der Ladespule durch Abtasten des Primärspulenpegels die Polradposition ohne die Vorschichte der Spulensignale bzw. deren Sequenz von Halbwellen zu kennen. Aufgrund dieser Strategie ist u. a. auch möglich für die Versorgungsspannung Pufferkondensatoren mit niedriger Kapazität zu verwenden. Dadurch baut sich die Betriebspannung im Startdrehzahlbereich schnell auf, fällt dann auch wieder schnell ab - dies ist für die Positionsbestimmung im Startbereich aber nicht relevant.

Der Verlauf der Versorgungsspannung ist in Fig.3f schematisch dargestellt. Bei Spannungen über dem LVR (Low Voltage Reset) ist der Prozessor betriebsbereit. Die Darstellung entspricht einer Drehzahl von ca. 200rpm. Die Zeit in der bei dieser Drehzahl die Betriebsspannung aufgebaut ist entspricht ca. 10 Grad einer Kurbelwellendrehung.

Dadurch ist nur ein geringer Hub am Anwerfseil (praktischer Versuch ab Druckpunkt ca. 15 cm) erforderlich, was bei beengten Platzverhältnissen vorteilhaft ist. Das Anwerfseil ist ca. 0,8m Lang und ermöglicht so 5..6 OT - Durchgänge.

Entscheidend dabei ist, dass die Drehung der Kurbelwelle ab spätestens 12° v.OT bis zu OT mit mindestens 200 rpm erfolgt, um die Versorgungsspannung Vdd von 0V bis zur Arbeitsspannung, d. h. größer LVR (Low Voltage Reset = 2.1V) aufzubauen.

Aufgrund der niedrigen Startdrehzahl ist ein Drehen des Motors über OT und somit durch den Verdichtungstakt mit geringem Kraftaufwand möglich. Diese Merkmale sind für Polräder mit ≥ 90mm Durchmesser gültig.

### Zeichnungen und Diagramme zu einem Ausführungsbeispiel der Erfindung

- Fig. 1: in axialer Teil-Draufsicht die Ausführung und das Zusammenwirken des Magnetgenerators mit wenigstens einem Teil des Zündmoduls
- Fig. 2a,b,c,d: Verläufe der in den Spulen U1, U2 und U5 induzierten Spannungen und der magnetischen Flüsse durch die Eisenkernabschnitte über die Zeit beziehungsweise den jeweils gleichen Drehwinkel des Motors
- Fig. 2a: Spannungsverlauf der in der Primärspule des Zündtransformators U5 und der Triggerspule U2 induzierten Spannung bei Anordnung nach Fig. 1
- Fig. 2b: magnetischer Fluss Bb durch den Kernschenkel Kb des Jochkerns K bei Anordnung nach Fig. 1
- Fig. 2c: Spannungsverlauf der in der Ladespule U1 induzierten Spannung bei Anordnung nach Fig. 1
- Fig. 2d: magnetischer Fluss Ba durch den Kernschenkel Ka bei Anordnung nach Fig. 1
- Fig. 3a,b,c: schematischer Verlauf der in den Spulen U1, U2 und U5 induzierten Spannungen über den jeweils gleichen Drehwinkel des Motors beziehungsweise das jeweils gleiche Zeitintervall
- Fig. 3a: schematischer Spannungsverlauf der Primärspule des Zündtransformators U5 und Triggerspule U2
- Fig. 3b: schematischer Spannungsverlauf der Ladespule U1
- Fig. 3c: schematischer Spannungsverlauf der positiven 2. und 4. Halbwelle der Ladespule U1
- Fig. 3d: schematischer Spannungsverlauf der gleichgerichteten 1. und 3. Halbwelle der Ladespule U1
- Fig. 3e: schematischer Spannungsverlauf der gleichgerichteten 1. und 3. Halbwelle der Ladespule U1 zu verschiedenen Drehzahlen mit Ux als Schwellspannung für die Auslösung des Zündfunkens
- Fig. 3f: schematischer Verlauf der Betriebspannung VDD des Mikrokontrollers
- Fig. 4: ein schematisches Blockschaltbild für das erfindungsgemäße Zündmodul
- Fig.5: ein variiertes Schaltungsdetail in entsprechender Blockbilddarstellung

### Bezugszeichenliste

- P: Polrad
- M: Dauermagnet
- Q: mittlere Querachse des Dauermagneten
- S, N: Polschuhe
- D: Drehrichtung
- K: Joch kern
- Ka: erster Schenkel
- Kb: zweiter Schenkel
- Km: Mittelteil
- L: Luftspalt
- Ba, Bb: Magnetfluss
- U1: Ladespule
- U2: Triggerspule
- U3: Spannungsversorgung der Steuerung
- U4: Energiespeicherelement / Zündkondensator
- U9: Zündschalter
- U8: Mikrokontroller - Steuerung
- U5: Zündübertrager / Zündtransformator
- U10: Spannungsversorgungseinheit für die Steuerung
- ADC: Analog-Digital-Wandler
- A1, A2: Signalabtastungseingänge
- VDD: Betriebsspannung (2.1...5.5V)
- LVR: Low Voltage Reset (2.1V) - oberhalb dieser Spannung ist der Mikrokontroller betriebsbereit
- U7: Signalpegel-Abschwächschaltung
- LS: in der Ladespule induzierte Spannung, mit den Halbwellen 2,4,6,8 (diese entsprechen den Halbwellen 2,4,6,8 von Fig.2c und Fig.3b)
- LSp: Signalverlauf der Ladespule U1 mit positiven Halbwellen 2 4 und 8
- LSn: Signalverlauf der Ladespule U1 mit negativen Halbwellen 2 und 6, gleichgerichtet als positive Halbwellen zur Speisung der Spannungsversorgung U10 und für die Abtastung durch den Mikrokontroller
- a: Spannungssignal der Trigger- oder Hilfsspule, mit den Halbwellen 10, 12, 14, 16
- b: Spannung des Zündkondensators
- c: Primärspannungssignal, mit den Halbwellen 10, 12, 14, 16
- d: Hochspannungsimpuls
- e: Ansteuerimpuls für den Zündschalter U9
- k: Ausgleichsstrom des Zündkondensators, Strom durch die Primärspule
- G1: Brückengleichrichter
- Lp: Primärspule des Zündtransformators U5
- Ls: Sekundärspule des Zündtransformators U5
- FU: Zündfunkenstrecke
- GND: Masse
- 30 - 34: Drehstellungen der mittleren Querachse Q
- PS: Primärspule
- TS: Triggerspule
- LS: Ladespule
- KW: Kurbelwelle
- Ux: abzutastende Spannungsschwelle der Ladespule, bei deren Überschreitung gezündet wird

## Patentansprüche

1. Elektrisches Zündverfahren, -anordnung, -anlage oder -system für Brennkraftmaschinen, unter Verwendung einer Anordnung mehrerer Spulen (U1,LS; U2,TS; U5,Lp,Ls) und eines sich synchron zur Maschine drehenden Polrads oder Magnetgenerators (P, M, S, N), dessen Magnetfeld dabei die Spulen (LS,TS,Lp,Ls) zeitweise durchflutet und darin pro Umdrehung eine Folge von Magnetflussänderungen (Ba, 1, 3, 5, 7; Bb, 9, 11, 13, 15) erzeugt, wobei eine Folge entsprechender Wechselspannungs-Halbwellen (2,4,6,8; 10,12,14,16) in den Spulen (U1 ;U2;U5) induziert wird, die verwendet werden:
zum Laden eines Energiespeicherelements (U4), das durch Betätigen eines Zündschalters (U9) über die Primärspulenwicklung (Lp) eines Zündübertragers (U5) zum Auslösen eines Zündfunkens (FU) entladen wird, und
zur Bildung der Betriebsspannung oder Spannungsversorgung (VDD) für eine elektronische, analoge und/oder digitale und/oder programmierbare Steuerung (U8), die zur Betätigung des Zündschalters (U9) in einem Zündzeitpunkt ZZP in Abhängigkeit von erfassten Wechselspannungs-Halbwellen (2,4,6,8; 10,12,14,16) und/oder vom Zustand der Brennkraftmaschine, beispielsweise deren Drehstellung oder Drehzahl (30-34), eingesetzt wird,
**gekennzeichnet durch**
ein Stopp- beziehungsweise Abstellsystem für die Brennkraftmaschine, das programm- und/oder schaltungstechnisch dazu ausgebildet oder eingerichtet ist, während des Stopp- und Auslaufvorganges und/oder des Stillstandes der Brennkraftmaschine eine Entladung des Energiespeicherelements (U4) zu verhindern und/oder dessen Aufladung zu betreiben, so dass für den nächsten Maschinenstart ein geladenes Energiespeicherelement zur Verfügung steht.

2. Zündverfahren, -anordnung, -anlage oder -system für Brennkraftmaschinen, unter Verwendung einer Anordnung mehrerer Spulen (U1,LS; U2,TS; U5,Lp,Ls) und eines sich synchron zur Maschine drehenden Polrads oder Magnetgenerators (P, M, S, N), dessen Magnetfeld dabei die Spulen (LS,TS,Lp,Ls) zeitweise durchflutet und darin pro Umdrehung eine Folge von Magnetflussänderungen (Ba, 1, 3, 5, 7; Bb, 9, 11, 13, 15) erzeugt, wobei eine Folge entsprechender Wechselspannungs-Halbwellen (2,4,6,8; 10,12,14,16) in den Spulen (U1 ;U2;U5) induziert wird, die verwendet werden:
zum Laden eines Energiespeicherelements (U4), das durch Betätigen eines Zündschalters (U9) über die Primärspulenwicklung (Lp) eines Zündübertragers (U5) zum Auslösen eines Zündfunkens (FU) entladen wird, und
zur Bildung der Betriebsspannung oder Spannungsversorgung (VDD) für eine elektronische, analoge und/oder digitale und/oder programmierbare Steuerung (U8), die zur Betätigung des Zündschalters (U9) in einem Zündzeitpunkt ZZP in Abhängigkeit von erfassten Wechselspannungs-Halbwellen (2,4,6,8; 10,12,14,16) und/oder vom Zustand der Brennkraftmaschine, beispielsweise deren Drehstellung oder Drehzahl (30-34), eingesetzt wird,
**dadurch gekennzeichnet, dass**
für den Start der Maschine beziehungsweise für dessen ersten Durchgang durch den oberen Totpunkt beziehungsweise OT ein Energiespeicherelement (U4) verwendet wird, dessen Aufladung vom davor liegenden Motorbetrieb stammt.

3. Zündverfahren, -anordnung, -anlage oder -system nach Anspruch 1 oder 2, **dadurch gekennzeichnet, dass** für den Dauerbetrieb der Maschine ein Energiespeicherelement (U4) verwendet wird, dessen Aufladung immer von einer vorausgegangenen Umdrehung des Polrads beziehungsweise Magnetgenerators stammt.

4. Zündverfahren, -anordnung, -anlage oder -system nach einem der vorangehenden Ansprüche, **gekennzeichnet durch** die Verwendung einer Brennkraftmaschine mit einem Magnetgenerator oder Polrad, dessen Durchmesser kleiner als 130 mm ist oder 90 mm beträgt.

5. Zündverfahren, -anordnung, -anlage oder -system nach einem der vorangehenden Ansprüche, **dadurch gekennzeichnet, dass** die Beschaltung und/oder der Schaltkreis des Energiespeicherelements (U4), insbesondere ein Zündkondensatorkreis, hochohmig ausgelegt ist, beispielsweise indem während des Stopp- und Auslaufvorganges der Zündschalter zur Unterbrechung des Stromflusses geöffnet gehalten wird.

6. Zündverfahren, -anordnung, -anlage oder -system nach einem der vorangehenden Ansprüche, **dadurch gekennzeichnet, dass** während des Stopp- und Auslaufvorganges das Energiespeicherelement (U4) aufgeladen wird.

7. Zündverfahren, -anordnung, -anlage oder -system nach einem der vorangehenden Ansprüche, **dadurch gekennzeichnet, dass** das Energiespeicherelement (U4) derart aufgeladen wird, dass sich bereits beim ersten OT-Durchgang der Brennkraftmaschine ein Hochspannungsimpuls von mindestens 10 kV ergibt.

8. Zündverfahren, -anordnung, -anlage oder -system nach einem der vorangehenden Ansprüche, **dadurch gekennzeichnet, dass** die Steuerung (U8) programm- und/oder schaltungstechnisch dazu eingerichtet und/oder ausgebildet ist und/oder eine Triggerschwelle (Ux) so gelegt ist, bei geringen Drehzahlen beispielsweise im Bereich um 200 UPM den Zündzeitpunkt Zzp in einen Bereich nahe zum oberen Totpunkt beziehungsweise OT zu legen.

9. Zündverfahren, -anordnung, -anlage oder -system nach Anspruch 8, **dadurch gekennzeichnet, dass** der Bereich nahe OT +/- 5 Winkelgrad um OT umfasst.

10. Zündverfahren, -anordnung, -anlage oder -system nach einem der vorangehenden Ansprüche, **dadurch gekennzeichnet, dass** die Steuerung (U8) programm- und/oder schaltungstechnisch dazu eingerichtet und/oder ausgebildet ist und/oder eine Triggerschwelle (Ux) so gelegt ist, dass der Zzp in einen Bereich um OT gelegt ist, der einen Rückschlag beim Motorstart verhindert.

11. Zündverfahren, -anordnung, -anlage oder -system nach einem der vorangehenden Ansprüche, **dadurch gekennzeichnet, dass** die Steuerung (U8) programm- und/oder schaltungstechnisch dazu eingerichtet und/oder ausgebildet ist, mit zunehmenden Drehzahlen eine Frühverstellung des Zündzeitpunkts Zzp zu bewirken.

12. Zündverfahren, -anordnung, -anlage oder -system für Brennkraftmaschinen, nach einem der vorangehenden Ansprüche, **dadurch gekennzeichnet, dass**
- dass der Zündschalter (U9) von der Steuerung (U8) in der Art angesteuert wird,
dass in der Betriebsart Funkenabschaltung ein Funkenüberschlag an der Funkenstrecke (FU) nur in so einem Winkelbereich (z.B. um UT) erfolgt in dem der Motor dadurch keine, bzw. keine effektive Verbrennung durchführt und in welchem keine Gefährdung der Maschine entsteht.

13. Zündverfahren, -anordnung, -anlage oder -system für Brennkraftmaschinen, nach einem der vorangehenden Ansprüche, **dadurch gekennzeichnet, dass**
dass in der Betriebsart Funkenabschaltung, im Abstellbetrieb, die Steuerung (U8) den Zündschalter (U9) so ansteuert, dass
- im Drehzahlbereich, in dem das Energiespeicherelement (U4) über seine Spannungsfestigkeit hinaus aufgeladen würde, der Zündschalter (U9) während der Ladephasen eingeschaltet ist,
und im Drehzahlbereich, in dem das Energiespeicherelement (U4) nicht über seine Spannungsfestigkeit hinaus aufgeladen würde, der Zündschalter (U9) nicht aktiviert wird
oder
- in einem Drehzahlbereich das Energiespeicherelement (U4) nicht geladen wird
und in einem anderen Drehzahlbereich das Energiespeicherelement (U4) geladen wird
und dass das Energiespeicherelement (U4) am Ende des Abstellvorganges auf einer Spannung aufgeladen ist welches einer Ladung von einer Drehzahl entspricht welche in der ersten Umrechung beim Motoranwerfen sonst nicht erreicht wird.

14. Verfahren nach einem der vorhergehenden Ansprüche,
**dadurch gekennzeichnet,**
**dass** in der Betriebsart Abstellen kein Funkenüberschlag an der Funkenstrecke (FU) in einem Winkelbereich erfolgt in dem der Motor **dadurch** eine effektive Verbrennung durchführt und in welchem eine Gefährdung der Maschine entstehen würde,
und **dass** in der Betriebsart Abstellen kein Funkenüberschlag an der Funkenstrecke (FU) im Bereich 90°v. OT bis 5° nach OT (oberer Totpunkt) erzeugt wird.

15. Zündverfahren, -anordnung, -anlage oder -system nach einem der vorangehenden Ansprüche, **gekennzeichnet durch** eine Auslegung oder Ausbildung derart, dass unmittelbar nach Maschinenstart mit dem ersten OT-Durchgang ein Zündfunke an der Zündkerze ausgelöst wird.

16. Zündverfahren, -anordnung, -anlage oder -system nach Anspruch 15, **dadurch gekennzeichnet, dass** anhand der ersten, von der Ladespule (LSp) stammenden Halbwelle (2) einer Polrad-Umdrehung ein Zündvorgang ausgelöst wird.

17. Zündverfahren, -anordnung, -anlage oder -system nach einem der vorangehenden Ansprüche, **gekennzeichnet durch** eine Erfassung und Überprüfung und Vergleichen der Höhen beziehungsweise Spannungsamplituden (10,14) der von der Ladespule (LSp) stammenden Halbwellen (2,6) gleicher Polarität einer Polrad-Umdrehung, wobei anhand der Halbwelle (2) niedrigerer Amplitude (10) ein Zündvorgang ausgelöst wird.

18. Magnetzündung oder Zündmodul, ausgebildet zur Durchführung des Verfahrens nach einem der vorhergehenden Ansprüche.
